# EUROPÄISCHE PATENTSCHRIFT

(11) **EP 3 437 476 B1**
(45) Veröffentlichungstag und Bekanntmachung des Hinweises auf die Patenterteilung: **13.11.2019**
(21) Anmeldenummer: 18182748.6
(22) Anmeldetag: 10.07.2018
(51) Int. Cl.: A21B 3/00, A21B 3/04, F24C 14/00

(54) **GARGERÄT UND VERFAHREN ZUM BETREIBEN EINES GARGERÄTS**
COOKING DEVICE AND METHOD FOR USING A COOKING DEVICE
APPAREIL DE CUISSON ET PROCÉDÉ D'UTILISATION D'UN APPAREIL DE CUISSON

(30) Priorität: 31.07.2017 DE 102017117224
(43) Veröffentlichungstag der Anmeldung: 06.02.2019
(73) Patentinhaber: Miele & Cie. KG, 33332 Gütersloh (DE)
(72) Erfinder: Sillmen, Ulrich, 33332 Gütersloh (DE)

(56) Entgegenhaltungen:
- EP-A1- 2 447 612
- WO-A1-02/068876
- DE-A1- 10 134 005
- DE-A1- 19 838 864

## Beschreibung

Die vorliegende Erfindung betrifft ein Gargerät sowie ein Verfahren zum Betreiben eines Gargeräts mit wenigstens einem beheizbaren und durch wenigstens eine Garraumtür verschließbaren Garraum und mit wenigstens einer mit dem Garraum strömungsverbundenen Aufbereitungseinrichtung. Die Aufbereitungseinrichtung umfasst wenigstens eine Reinigungseinheit zum Reinigen und wenigstens eine Trocknereinheit zum Trocknen von Luft aus dem Garraum.

Bei modernen Gargeräten werden immer häufiger ein möglichst emissionsarmer und oft sogar ein emissionsfreier Betrieb gewünscht. Dabei werden der beim Garvorgang entstehende Wrasen und besonders dessen Feuchtigkeit, Fett und geruchsintensive Stoffe als störende Emissionen empfunden. Für einen emissionsfreien Betrieb wird also gewünscht, dass diese Bestandteile nicht oder nur in vernachlässigbaren Mengen in die Umgebung des Gargeräts bzw. in den Küchenraum gelangen.

Allerdings entstehen bei Garvorgängen fast immer Wrasen-Emissionen, zum Beispiel durch den aus dem Gargut austretenden Wasserdampf und die dabei mitgenommenen Fette. Zudem kann auch nicht einfach darauf verzichtet werden, die feuchte Luft bzw. den Wrasen aus dem Garraum zu entfernen. Ansonsten kommt es zu einer zu hohen Garraumfeuchte, was für viele Garprozesse und Zubereitungsarten oft von großem Nachteil ist. Beispielsweise muss bei der Zubereitung von Braten und knusprigen Teigwaren oder auch bei Grillvorgängen der feuchte Wrasen aus dem Garraum entfernt werden, um optimale Garergebnisse erzielen zu können.

Dokumente DE 19838864 A1 und EP 2447612 A1 stellen einen für die Erfindung relevanten Stand der Technik dar.

Es ist daher die Aufgabe der vorliegenden Erfindung, eine verbesserte und insbesondere unaufwendige Möglichkeit zur Reduzierung der Wrasen-Emissionen eines Gargeräts zur Verfügung zu stellen.

Diese Aufgabe wird gelöst durch ein Gargerät mit den Merkmalen des Anspruchs 1 sowie durch ein Verfahren den Merkmalen des Anspruchs 15. Bevorzugte Merkmale sind Gegenstand der Unteransprüche. Weitere Vorteile und Merkmale ergeben sich aus der allgemeinen Beschreibung der Erfindung und der Beschreibung der Ausführungsbeispiele.

Das erfindungsgemäße Gargerät umfasst wenigstens einen beheizbaren und durch wenigstens eine Garraumtür verschließbaren Garraum. Das Gargerät umfasst wenigstens eine mit dem Garraum strömungsverbundene Aufbereitungseinrichtung. Die Aufbereitungseinrichtung umfasst wenigstens eine Reinigungseinheit zum Reinigen von Luft aus dem Garraum und wenigstens eine Trocknereinheit zum Trocknen von Luft aus dem Garraum. Dabei sind die Reinigungseinheit und die Trocknereinheit unabhängig voneinander betreibbar. Die Reinigungseinheit und die Trocknereinheit sind über unabhängig voneinander betreibbare Strömungswege mit dem Garraum verbunden.

Das erfindungsgemäße Gargerät bietet viele Vorteile. Einen erheblichen Vorteil bietet die parallele (unabhängig voneinander betreibbare) Anbindung der Reinigungseinheit und der Trocknungseinheit an den Garraum. Dadurch können das Ausmaß der Trocknung und das der Fettentfernung frei gewählt werden. Beispielsweise können dadurch unterschiedliche Volumenströme aus dem Garraum mit wenig konstruktivem Aufwand umgesetzt werden. Zudem können die Anforderungen an die Trocknereinheit und die Reinigungseinheit separat umgesetzt werden, sodass diese zum Beispiel hinsichtlich Energieaufwand und Bauraum besonders gut optimiert werden können.

Das erfindungsgemäße Gargerät bietet zudem eine besonders energieschonende Möglichkeit, die Wrasen-Emissionen zu reduzieren bzw. zu vermeiden. Beispielsweise unproblematisch, wenn die Reinigungseinheit die Luft auf hohe Temperaturen und beispielsweise auf bis zu 500 °C erhitzt. Aufgrund der separaten Strömungswege kann auf eine sehr energieaufwendige Abkühlung dieser aufgeheizten Luft durch die Trocknereinheit verzichtet werden. Bei der vorliegenden Erfindung kann die aufgeheizte Luft aus der Reinigungseinheit sogar für den Garprozess weiterverwendet werden.

Insbesondere sind die Reinigungseinheit und die Trocknereinheit über jeweils wenigstens einen separaten Strömungsweg an den Garraum angebunden. Der wenigstens eine Strömungsweg der Reinigungseinheit ist insbesondere parallel zu dem wenigstens einen Strömungsweg der Trocknereinheit geschaltet. Die Strömungswege der Reinigungseinheit und Trocknereinheit sind insbesondere unabhängig zueinander ausgebildet. Insbesondere sind die Strömungswege der Reinigungseinheit und der Trocknereinheit unabhängig voneinander öffenbar und/oder schließbar. Insbesondere weisen die Strömungswege der Reinigungseinheit und der Trocknereinheit jeweils unabhängig voneinander ansteuerbare Ventileinrichtungen auf. Insbesondere sind für die Strömungswege der Reinigungseinheit und der Trocknereinheit jeweils wenigstens eine Leitung und/oder wenigstens ein Kanal vorgesehen.

Die Reinigungseinheit und die Trocknereinheit sind insbesondere unabhängig voneinander betreibbar und vorzugsweise unabhängig voneinander steuerbar bzw. regelbar. Im Rahmen der vorliegenden Erfindung wird unter einem Steuern auch ein Regeln verstanden. Insbesondere ist eine Trocknungsleistung der Trocknereinheit unabhängig von einer Reinigungsleistung der Reinigungseinheit einstellbar. Die Reinigungseinheit und die Trocknereinheit sind insbesondere parallel betreibbar. Die Reinigungseinheit und die Trocknereinheit können zeitgleich und/oder zeitversetzt betreibbar sein.

Insbesondere sind die Strömungswege der Reinigungseinheit und der Trocknereinheit mit jeweils wenigstens einer Garraumöffnung strömungsverbunden. Die parallelen Strömungswege können auch über wenigstens eine gemeinsame Garraumöffnung mit dem Garraum verbunden sein. Die parallelen Strömungswege können wenigstens einen abschnittsweise gemeinsam genutzten Strömungsweg umfassen.

Insbesondere ist die Reinigungseinheit dazu geeignet und ausgebildet, die Luft aus dem Garraum über wenigstens eine Vorlaufleitung zu entnehmen und/oder die gereinigte Luft über wenigstens eine Rücklaufleitung wieder in den Garraum zu führen. Das ermöglicht einen besonders unabhängigen Betrieb der Reinigungseinheit. Insbesondere ist die Reinigungseinheit für einen Umluftbetrieb ausgebildet, bei dem Luft aus dem Garraum entnommen, gereinigt und wieder zurück in den Garraum geführt wird. Die Reinigungseinheit kann auch für einen Abluftbetrieb ausgebildet sein. Insbesondere ist die Reinigungseinheit dann mit wenigstens einer Auslasseinrichtung strömungsverbunden, über welche die gereinigte Luft wenigstens teilweise aus dem Gargerät abführbar ist.

Insbesondere ist die Trocknereinheit dazu geeignet und ausgebildet, die Luft aus dem Garraum über wenigstens eine Vorlaufleitung zu entnehmen. Insbesondere ist die Trocknereinheit dazu geeignet und ausgebildet, die getrocknete Luft über wenigstens eine Rücklaufleitung wieder in den Garraum zu führen und/oder die getrocknete Luft über wenigstens eine Auslasseinrichtung teilweise aus dem Gargerät abzuführen. Das bietet eine besonders unabhängige Ausgestaltung des Trocknerbetriebs. Insbesondere ist die Trocknereinheit für einen Umluftbetrieb ausgebildet, bei dem Luft aus dem Garraum entnommen, getrocknet und wieder zurück in den Garraum geführt wird.

Die Trocknereinheit kann auch für einen Abluftbetrieb ausgebildet sein. Insbesondere ist die Trocknereinheit dann mit wenigstens einer Auslasseinrichtung strömungsverbunden, sodass die getrocknete Luft über die Auslasseinrichtung wenigstens teilweise abführbar ist. In einer Ausgestaltung kann die Trocknereinheit nur für einen Umluftbetrieb oder nur für einen Abluftbetrieb ausgebildet sein. In einer vorteilhaften Ausgestaltung ist die Trocknereinheit sowohl für einen Umluftbetrieb als auch für einen Abluftbetrieb ausgebildet. Insbesondere ist die Trocknereinheit dann über die Rücklaufleitung mit dem Garraum und über die Auslasseinrichtung mit der Umgebung des Gargeräts strömungsverbunden. Insbesondere ist die Trocknereinheit dazu geeignet und ausgebildet, mittels wenigstens einer Ventileinrichtung die Rücklaufleitung zu schließen und die Auslasseinrichtung zu öffnen und umgekehrt. Die Trocknereinheit kann dazu geeignet und ausgebildet sein, mittels der Ventileinrichtung ein Verhältnis der in den Garraum zurückgeführten Luft zu der über die Auslasseinrichtung abgeführten Luft einzustellen.

In einer vorteilhaften Ausgestaltung ist die Trocknereinheit dazu geeignet und ausgebildet, die Luft aus dem Garraum mit wenigstens einem Kühlluftstrom für wenigstens eine elektronische Komponente des Gargeräts zu mischen. Dadurch kann die Luft aus dem Garraum zusätzlich getrocknet werden. Das Mischen erfolgt insbesondere nach dem Trocknen der Luft. Die durch das Mischen erhaltene Mischluft ist insbesondere in den Garraum zurückführbar und/oder aus dem Gargerät über die Auslasseinrichtung abführbar. Die Mischluft kann auch wenigstens einer weiteren Trocknung unterzogen werden. Der Kühlluftstrom wird insbesondere mittels wenigstens einer Gebläseeinrichtung erzeugt. Die Gebläseeinrichtung für den Kühlluftstrom kann auch zum Fördern der Luft durch die Trocknereinheit einsetzbar sein. Die elektronische Komponente umfasst beispielsweise wenigstens eine Steuereinrichtung und/oder wenigstens eine Leistungselektronik.

Vorzugsweise ist die Trocknereinheit dazu geeignet und ausgebildet, die Luft aus dem Garraum mittels wenigstens eines Wärmetauschers zu trocknen. Insbesondere umfasst die Trocknereinheit wenigstens einen Wärmetauscher. Das bietet eine besonders unaufwendige und zugleich sehr wirksame Feuchtereduzierung. Besonders bevorzugt umfasst die Trocknereinheit einen Luft-Luft-Wärmetauscher, welcher durch einen Kühlluftstrom kühlbar ist, der durch wenigstens eine Gebläseeinrichtung erzeugt wird. Möglich ist auch ein wassergekühlter Wärmetauscher. Es ist möglich, dass der Kühlluftstrom für den Wärmetauscher auch zur Kühlung wenigstens einer elektronischen Komponente des Gargeräts einsetzbar ist. Dadurch wird für den Wärmetauscher und die elektronische Komponente eine unaufwendige und kostengünstige Kühlung verwirklicht. Die elektronische Komponente kann dabei dem Wärmetauscher in Strömungsrichtung vorgeschaltet und/oder nachgeschaltet sein. Die elektronische Komponente kann die zuvor beschriebene elektronische Komponente sein.

Der Wärmetauscher der Trocknereinheit kann aber auch mittels wenigstens einer Wärmepumpeneinrichtung und/oder wenigstens einer thermoelektrischen Kühleinrichtung kühlbar sein. Durch eine solche Kühlung kann die Luft auf ein besonders geringes Maß an Feuchte getrocknet werden. Die thermoelektrische Kühleinrichtung umfasst zum Beispiel ein Peltierelement oder dergleichen. Die Trocknereinheit kann auch durch wenigstens eine Kältemaschine kühlbar sein. Wenn eine Wärmepumpeneinrichtung vorgesehen ist, umfasst diese vorzugsweise wenigstens eine Kondensatoreinrichtung zur Kondensation der Feuchte der Luft. Vorzugsweise ist die Kondensatoreinrichtung dann zugleich auch als eine Verdampfereinrichtung für wenigstens ein Kältemittel der Wärmepumpeneinrichtung ausgebildet. Für ein in der Trocknereinheit anfallendes Kondensat kann ein Sammelbehälter und/oder eine Abführeinrichtung vorgesehen sein. Die Abführeinrichtung kann beispielsweise an ein Abwassersystem angeschlossen sein.

In einer besonders bevorzugten Ausgestaltung ist der Reinigungseinheit und/oder der Trocknereinheit die Luft aus dem Garraum mittels wenigstens eines Umluftgebläses für einen Umluftgarbetrieb wenigstens teilweise zuführbar. Eine solche Ausgestaltung ist besonders vorteilhaft, da in dem beheizbaren Garraum in der Regel auch ein Umluftgebläse vorgesehen ist. Dadurch kann auf eine weitere Gebläseeinrichtung zum Fördern der Luft durch die Reinigungseinheit bzw. Trocknereinheit verzichtet werden. Beispielsweise kann der Reinigungseinheit und/oder Trocknereinheit die Luft aus dem Garraum dadurch zugeführt werden, dass das Umluftgebläse in der Reinigungseinheit und/oder Trocknereinheit einen Unterdruck erzeugt. Dadurch kann das Umluftgebläse die Luft aus dem Garraum in die Reinigungseinheit bzw. Trocknereinheit einsaugen. Möglich ist auch, dass das Umluftgebläse in der Reinigungseinheit und/oder Trocknereinheit einen Überdruck aufbaut. Dann wird die Luft aus dem Garraum beispielsweise durch die Reinigungseinheit bzw. die Trocknereinheit geblasen. Unter einem Umluftgebläse wird insbesondere auch ein Heißluftgebläse verstanden.

In einer vorteilhaften Ausgestaltung kann der Reinigungseinheit und/oder Trocknereinheit die Luft aus dem Garraum mittels wenigstens eines Kühlluftgebläses zur Gerätekühlung wenigstens teilweise zuführbar sein. Auch das bietet eine sehr unaufwendige Möglichkeit, die Luft durch die Trocknereinheit bzw. die Reinigungseinheit zu fördern, da in der Regel eine Gerätekühlung vorgesehen ist. Dabei kann das Kühlluftgebläse auch zur Erzeugung eines Kühlluftstroms zur Kühlung eines Wärmetauschers der Trocknereinheit einsetzbar sein. Insbesondere ist das Kühlluftgebläse dazu geeignet und ausgebildet, gereinigte Luft aus dem Garraum und/oder aus der Trocknereinheit in die Umgebung des Gargeräts abzuführen. Es kann vorgesehen sein, dass der Reinigungseinheit und/oder Trocknereinheit die Luft sowohl durch ein Umluftgebläse als auch durch das Kühlluftgebläse zuführbar ist.

Vorzugsweise ist die Reinigungseinheit dazu geeignet und ausgebildet, die gereinigte Luft in einen Ansaugbereich eines Umluftgebläses für einen Umluftgarbetrieb zurückzuführen. Vorzugsweise ist die Trocknereinheit dazu geeignet und ausgebildet, die getrocknete Luft in einen Ansaugbereich eines Umluftgebläses für einen Umluftgarbetrieb zurückzuführen. Das ermöglicht die Erzeugung eines besonders starken Volumenstroms in der Reinigungseinheit bzw. Trocknereinheit. Das Umluftgebläse ist dabei insbesondere das zuvor beschriebene Umluftgebläse. Insbesondere mündet die Rücklaufleitung der Reinigungseinheit und/oder Trocknereinheit in dem Ansaugbereich des Umluftgebläses.

Insbesondere ist die Reinigungseinheit und/oder die Trocknereinheit dazu geeignet und ausgebildet, die gereinigte bzw. getrocknete Luft in einem Überdruckbereich des Umluftgebläses aufzunehmen. Dadurch kann die Luft besonders gut der Trocknereinheit bzw. der Reinigungseinheit zugeführt werden. Insbesondere mündet die Vorlaufleitung der Reinigungseinheit und/oder Trocknereinheit in den Überdruckbereich des Umluftgebläses. So kann der Volumenstrom in der Trocknereinheit bzw. Reinigungseinheit besonders gut verstärkt werden, da zum einen die Luft in die Vorlaufleitung gedrückt und zum anderen an der Rücklaufleitung gesaugt wird.

In einer bevorzugten Weiterbildung umfasst das Gargerät wenigstens einen weiteren Strömungsweg zum Abführen von Luft aus dem Garraum in die Umgebung des Gargeräts. Der weitere Strömungsweg ist insbesondere unabhängig von den Strömungswegen der Reinigungseinheit und/oder der Trocknereinheit ausgebildet. Insbesondere ist der weitere Strömungsweg an einem Ende mit dem Garraum strömungsverbunden und mündet an einem anderen Ende in die Umgebung des Gargeräts. Dadurch kann der Garraum in die Umgebung entlüftet werden, was in bestimmten Fällen von Vorteil ist. Der weitere Strömungsweg kann mit einem Kühlluftkanal strömungsverbunden sein, welcher zur Abfuhr von Geräte Kühlluft aus dem Gargerät dient oder einen solchen bereitstellen.

Der weitere Strömungsweg kann auch wenigstens abschnittsweise durch den Strömungsweg der Reinigungseinheit und/oder der Trocknereinheit bereitgestellt werden. Beispielsweise wird der weitere Strömungsweg durch eine Auslasseinrichtung bereitgestellt, welche zum Abführen der getrockneten Luft aus der Trocknereinheit und/oder zum Abführen der gereinigten Luft aus der Reinigungseinheit vorgesehen ist.

Insbesondere ist die Aufbereitungseinrichtung dazu geeignet und ausgebildet, den weiteren Strömungsweg automatisiert zu verschließen und/oder zu öffnen. Insbesondere ist die Aufbereitungseinrichtung dazu geeignet und ausgebildet, Zeitpunkt und/oder Dauer und/oder Häufigkeit des Öffnens und/oder Schließen des weiteren Strömungswegs einzustellen. Insbesondere ist die Aufbereitungseinrichtung dazu geeignet und ausgebildet, den weiteren Strömungsweg in Abhängigkeit eines Verschmutzungsgrades und/oder eines Feuchtegehaltes der Luft im Garraum zu öffnen und/oder zu schließen. Dazu ist die Aufbereitungseinrichtung vorzugsweise mit wenigstens einer Sensoreinrichtung zur Erfassung des Verschmutzungsgrades und/oder Feuchtegehalts der Luft im Garraum wirkverbunden. Das hat den Vorteil, dass eine Abfuhr von Luft aus dem Garraum beispielsweise nur dann erfolgt, wenn die Luft entsprechend gereinigt und getrocknet ist, sodass unerwünschte Emissionen in die Umgebung des Gargeräts wirkungsvoll vermieden werden.

Die Reinigungseinheit umfasst vorzugsweise wenigstens eine Katalysatoreinrichtung. Die Katalysatoreinrichtung katalysiert bzw. unterstützt vorzugsweise Reaktionen zum Abbau von Fetten und/oder Ölen sowie von geruchsbelästigenden Stoffen des Wrasens. Die Katalysatoreinrichtung ist insbesondere beheizbar ausgebildet. Die Reinigungseinheit ist bevorzugt dazu geeignet und ausgebildet, hydrophobe Bestandteile der Luft aus dem Garraum mittels wenigstens einer Wascheinrichtung in wenigstens einer Waschflüssigkeit zu kondensieren. Dadurch können die im Wrasen enthaltenen Verunreinigungen besonders gut und wirksam entfernt werden.

Die Wascheinrichtung kann zur Abfuhr von verunreinigter Waschflüssigkeit mit wenigstens einem Sammelbehälter und/oder mit wenigstens einer Abführeinrichtung verbunden sein. Die Abführeinrichtung kann beispielsweise an ein Abwassersystem angeschlossen sein. Es kann eine Zwischenlagerung zur Abkühlung von erwärmter Waschflüssigkeit vorgesehen sein. Möglich ist, dass eine sensorgesteuerte Abfuhr der verunreinigten Waschflüssigkeit vorgesehen ist. Beispielsweise kann ein Verunreinigungsgrad und/oder ein Füllstand der Waschflüssigkeit sensorisch erfasst werden.

Es ist möglich, dass die Wascheinrichtung dazu geeignet und ausgebildet ist, die Luft aus dem Garraum durch die Waschflüssigkeit zu leiten und/oder mit der Waschflüssigkeit zu besprühen. Das bietet eine besonders wirksame Reinigung der wrasenhaltigen Luft. Es ist möglich, dass die versprühte Waschflüssigkeit auffangbar und in einem Kreislauf einsetzbar ist. Es kann vorgesehen sein, verbrauchte und/oder abgeführte Waschflüssigkeit automatisiert durch neue Waschflüssigkeit zu ersetzen. Dazu kann beispielsweise wenigstens ein Vorratsbehälter für Waschflüssigkeit und/oder für ein in der Waschflüssigkeit aufgenommenes Reinigungsmittel vorgesehen sein. Möglich ist auch, dass das Gargerät über wenigstens einen Wasseranschluss verfügt, durch welchen der Wascheinrichtung automatisiert Wasser nachfüllbar ist. Insbesondere ist die Zufuhr und/oder Abfuhr der Waschflüssigkeit steuerbar und vorzugsweise regelbar.

Die Waschflüssigkeit enthält insbesondere wenigstens einen Emulgator und/oder wenigstens einen Fettlöser. Eine Zufuhr des Emulgators und/oder des Fettlösers zu der Waschflüssigkeit ist kann automatisiert erfolgen. Die Reinigungseinheit kann einen Vorratsbehälter für den Emulgator und/oder den Fettlöser umfassen. Die Waschflüssigkeit kann auch andere zur Reinigung von wrasenhaltiger Luft geeignete Reinigungsmittel umfassen.

Vorzugsweise ist die Wascheinrichtung dazu geeignet und ausgebildet, Feuchtigkeit in der Luft aus dem Garraum wenigstens teilweise durch die Waschflüssigkeit zu kondensieren. Das bietet den Vorteil, dass neben der Reinigung auch eine Entfeuchtung der Luft erreicht wird.

Insbesondere ist die Waschflüssigkeit kälter als die Luft aus dem Garraum. Es ist möglich, dass die Wascheinrichtung und/oder die Trockeneinheit dazu geeignet und ausgebildet ist, die Waschflüssigkeit zu kühlen.

In allen Ausgestaltungen ist es besonders bevorzugt, dass die Aufbereitungseinrichtung dazu geeignet und ausgebildet ist, eine Luftfördermenge zu der Trocknereinheit und/oder zu der Reinigungseinheit zu steuern und vorzugsweise zu regeln. Dadurch kann der Betrieb der Aufbereitungseinrichtung besonders gut an die jeweilige Verunreinigung bzw. Feuchtigkeit des Wrasens angepasst werden, sodass ein energieschonender Betrieb möglich ist.

Insbesondere umfasst die Aufbereitungseinrichtung wenigstens eine steuerbare und insbesondere regelbare Gebläseeinrichtung zum Fördern von Luft in und/oder aus der Trocknereinheit und/oder Reinigungseinheit. Die Aufbereitungseinrichtung kann auch wenigstens eine steuerbare und insbesondere regelbare Ventileinrichtung aufweisen. Die Ventileinrichtung kann beispielsweise Ventile und/oder Klappen und/oder andere geeignete Stellglieder umfassen.

Die Luftfördermenge zu der Trocknereinheit und/oder zu der Reinigungseinheit kann vorzugsweise in Wirkverbindung mit wenigstens einer Sensoreinrichtung zur Erfassung der Garraumfeuchte und/oder eines Verschmutzungsgrades steuerbar sein. Dazu umfasst die Aufbereitungseinrichtung insbesondere wenigstens eine Sensoreinrichtung zur Überwachung einer Restfeuchte und/oder eines Verschmutzungsgrades. Insbesondere ist die Aufbereitungseinrichtung dazu geeignet und ausgebildet, mittels eines von der Sensoreinrichtung bereitgestellten Sensorsignals die Trocknereinheit und/oder die Reinigungseinheit anzusteuern und vorzugsweise zu regeln. Insbesondere ist die Luftfördermenge zu der Trocknereinheit und/oder zu der Reinigungseinheit in Abhängigkeit des Sensorsignals steuerbar und insbesondere regelbar.

In einer besonders bevorzugten Ausgestaltung umfasst das Gargerät wenigstens eine Klimaeinrichtung zur Anpassung der Garraumfeuchte während eines Garvorgangs auf wenigstens einen Zielwert. Dadurch lassen sich besonders gute Garergebnisse erzielen, da ein Austrocknen des Garguts verhindert wird und die für ein Lebensmittel optimale Garraumfeuchte gezielt eingestellt werden kann. Vorzugsweise ist die Klimaeinrichtung dazu geeignet und ausgebildet, mittels wenigstens einer Befeuchtungseinrichtung die Feuchte im Garraum auf den Zielwert zu erhöhen. Beispielsweise ist die Befeuchtungseinrichtung dazu geeignet und ausgebildet, Wasserdampf zu erzeugen und in den Garraum einzubringen. Die Klimaeinrichtung kann auch dazu geeignet und ausgebildet sein, eine Trocknungsleistung der Trocknereinheit wenigstens zeitweise so zu reduzieren, dass die Garraumfeuchte durch eine von einem Gargut abgegebene Feuchtigkeit auf den Zielwert erhöht wird. Zur Einstellung des Zielwerts ist die Klimaeinrichtung insbesondere mit wenigstens einer Sensoreinrichtung mit wenigstens einem Sensor zur Überwachung der Garraumfeuchte wirkverbunden. Bevorzugt ist wenigstens ein Sensor im Garraum angeordnet, um dort die Feuchte zu erfassen.

Insbesondere ist die Klimaeinrichtung dazu geeignet und ausgebildet, mittels der Trocknereinheit und/oder der Befeuchtungseinrichtung die Garraumfeuchte auf wenigstens einen in einem Garprogramm hinterlegten Zielwert einzustellen. Das hat den Vorteil, dass je nach Garprogramm eine bestimmte Garraumfeuchte und zum Beispiel ein zeitgesteuertes Feuchteprofil umgesetzt werden können.

Die Trocknungsleistung kann beispielsweise über einen Volumenstrom und/oder Massenstrom und/oder eine Temperatur eines Kühlmediums zum Kühlen der Trocknereinheit einstellbar sein. Die Trocknereinheit kann auch mittels wenigstens einer thermoelektrischen Kühleinrichtung kühlbar sein. Dann ist die Trocknungsleistung insbesondere über eine Leistung der Kühleinrichtung einstellbar. Die Trocknereinheit kann auch mittels einer Kältemaschine und/oder mittels einer Wärmepumpeneinrichtung kühlbar sein. Zur Einstellung der Trocknungsleistung kann dann eine Leistung der Kältemaschine bzw. Wärmepumpeneinrichtung herangezogen werden.

Die Trocknereinheit ist insbesondere dazu geeignet und ausgebildet, mittels wenigstens einer Sensoreinrichtung wenigstens eine charakteristische Größe für die Feuchte der zu trocknenden Luft und/oder der getrockneten Luft zu erfassen. Vorzugsweise umfasst die Sensoreinrichtung wenigstens einen Sensor. Der Sensor ist insbesondere als ein Feuchtesensor und/oder als ein Temperatursensor ausgebildet. Die charakteristische Größe für die Feuchte kann zum Beispiel die Luftfeuchte und/oder die Lufttemperatur sein. Beispielsweise ist wenigstens ein Sensor der Trocknereinheit in Strömungsrichtung vorgeschaltet und/oder nachgeschaltet.

Die Trocknereinheit ist insbesondere in Abhängigkeit der erfassten Größe steuerbar und vorzugsweise regelbar. Insbesondere ist die Trocknereinheit dazu geeignet und ausgebildet, die Luft aus dem Garraum auf einen Zielwert zu trocknen. Insbesondere ist in Abhängigkeit der sensorisch erfassten Größe eine Trocknungsleistung der Trocknereinheit steuerbar und/oder regelbar.

Besonders bevorzugt ist die Trocknereinheit dazu geeignet und ausgebildet, die Luft auf eine Raumluftfeuchte zu trocknen. Die Raumluftfeuchte entspricht insbesondere einer relativen Luftfeuchtigkeit von weniger als 70 % und vorzugsweise weniger als 60 % und besonders bevorzugt weniger als 50 % insbesondere bei einer Raumtemperatur. Die Raumtemperatur liegt insbesondere bei 20 °C. Es kann auch eine Raumtemperatur von 25 °C angenommen werden. Dadurch herrscht im Garraum eine besonders günstige Atmosphäre zur Zubereitung von Lebensmitteln. Zudem wird auch bei längeren Garvorgängen die Raumluftfeuchte der Küche nicht ungünstig erhöht, wenn die Luft abgeführt wird.

Bevorzugt ist die Trocknereinheit dazu geeignet und ausgebildet, die Luft auf eine Feuchte nicht wesentlich oberhalb einer Raumluftfeuchte zu trocknen. Bevorzugt ist auch, dass die Aufbereitungseinrichtung dazu geeignet und ausgebildet ist, die Luft auf eine Feuchte unterhalb einer Raumluftfeuchte und zum Beispiel auf eine relative Luftfeuchtigkeit von weniger als 50 % bei Raumtemperatur zu trocknen. Insbesondere ist die Aufbereitungseinrichtung dazu geeignet und ausgebildet, die Luft auf eine Feuchte zu trocknen, welche nicht mehr als 30 Prozentpunkte und vorzugsweise nicht mehr als 20 Prozentpunkte und besonders bevorzugt nicht mehr als zehn Prozentpunkte oberhalb der Raumluftfeuchte liegt. Möglich ist auch eine Trocknung auf höhere Feuchtewerte.

Die Trocknereinheit kann dazu geeignet und ausgebildet sein, die Luft zu kühlen und insbesondere auf eine Temperatur unterhalb einer Raumtemperatur zu kühlen. Insbesondere ist die Trocknereinheit dazu geeignet und ausgebildet, die Luft unterhalb 20 °C und vorzugsweise unterhalb 15 °C und besonders bevorzugt unterhalb 10 °C zu kühlen. Möglich ist auch, dass die Trocknereinheit dazu geeignet ausgebildet ist, die Luft unterhalb 5 °C zu kühlen. Insbesondere umfasst die Trocknereinheit wenigstens eine Kältemaschine und/oder wenigstens eine Wärmepumpeneinrichtung und/oder wenigstens eine thermoelektrische Kühleinrichtung. Durch eine solche Kühlung kann die Luft auf ein besonders geringes Maß an Feuchte getrocknet werden.

Insbesondere ist die Aufbereitungseinrichtung dazu geeignet und ausgebildet, die Luft über den weiteren Strömungsweg bzw. die Auslasseinrichtung nur dann in die Umgebung des Gargeräts abzuführen, wenn die Luft auf eine Raumluftfeuchte und/oder auf wenigstens einen Zielwert für eine Luftfeuchte getrocknet ist. Dadurch treten keine unerwünschten Feuchte Emissionen aus dem Gargerät auf.

Das erfindungsgemäße Verfahren dient zum Betreiben eines Gargeräts mit wenigstens einem beheizbaren und durch wenigstens eine Garraumtür verschließbaren Garraum. Das Gargerät umfasst wenigstens eine mit dem Garraum strömungsverbundene Aufbereitungseinrichtung, welche wenigstens eine Reinigungseinheit zum Reinigen und wenigstens eine Trocknereinheit zum Trocknen von Luft aus dem Garraum umfasst. Dabei werden die Reinigungseinheit und die Trocknereinheit unabhängig voneinander betrieben und sind über parallel geschaltete Strömungswege mit dem Garraum verbunden.

Das erfindungsgemäße Verfahren bietet ebenfalls viele Vorteile und ermöglicht eine besonders unaufwendige Reduzierung von Wrasen- und Feuchte-Emissionen während des Garbetriebs. Das erfindungsgemäße Gargerät ist vorzugsweise dazu geeignet und ausgebildet, nach dem hier vorgestellten Verfahren betrieben zu werden.

Weitere Vorteile und Merkmale der vorliegenden Erfindung ergeben sich aus den Ausführungsbeispielen, welche im Folgenden mit Bezug auf die beiliegenden Figuren erläutert werden.

In den Figuren zeigen:
- Figur 1: eine rein schematische Darstellung eines erfindungsgemäßen Gargeräts in einer Seitenansicht;
- Figur 2: eine rein schematische Darstellung einer Ausgestaltung des Gargeräts;
- Figur 3: eine rein schematische Darstellung einer anderen Ausgestaltung des Gargeräts; und
- Figur 4: eine rein schematische Darstellung einer weiteren Ausgestaltung des Gargeräts.

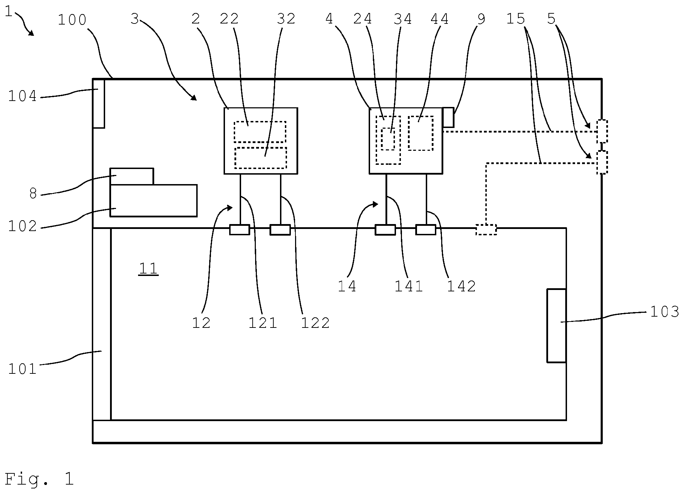

Die Figur 1 zeigt ein erfindungsgemäßes Gargerät 1, welches hier als ein Backofen 100 ausgeführt ist. Das Gargerät wird nach dem erfindungsgemäßen Verfahren betrieben. Das Gargerät 1 hat einen beheizbaren Garraum 11, welcher durch eine Garraumtür 101 verschließbar ist. Das Gargerät 1 ist hier als ein Einbaugerät vorgesehen. Es kann auch als ein Standgerät ausgebildet sein.

Für die Beheizung des Garraums 11 stehen verschiedene Heizeinrichtungen zur Verfügung. Möglich ist unter anderem das Beheizen mit einer Ober- und/oder Unterhitze, mit einer Umluftfunktion, mit einer Heißluftheizquelle und/oder mit einer Grillfunktion. Möglich ist auch, dass das Gargerät 1 als ein Kombigerät mit einer Mikrowellenfunktion und/oder einer Dampfgarfunktion ausgebildet ist.

Das Gargerät 1 umfasst hier eine Steuereinrichtung zur Steuerung bzw. Regelung von Gerätefunktionen und Betriebszuständen. Über die Steuereinrichtung sind hier verschiedene Betriebsarten und vorzugsweise verschiedene Garprogramme bzw. Programmbetriebsarten und andere Automatikfunktionen ausführbar.

Zur Bedienung des Gargerätes 1 ist eine Bedieneinrichtung 104 vorgesehen. Beispielsweise können darüber die Betriebsart, die Garraumtemperatur und/oder ein Garprogramm bzw. eine Programmbetriebsart oder andere Automatikfunktion ausgewählt und eingestellt werden. Die Bedieneinrichtung 104 umfasst auch eine Anzeige, über die Benutzerhinweise und z. B. Eingabeaufforderungen angezeigt werden können.

Das Gargerät 1 umfasst eine Aufbereitungseinrichtung 3 mit einer Reinigungseinheit 2 zum Reinigen und einer Trocknereinheit 4 zum Entfeuchten der Garraumluft. Die Reinigungseinheit 2 und die Trocknereinheit 4 sind hier über unabhängige und parallel geschaltete Strömungswege 12, 14 mit dem Garraum 11 verbunden.

Durch die parallelen Strömungswege 12, 14 braucht die Trocknereinheit 4 die Garraumluft für die Trocknung nur ausgehend von der Garraumtemperatur abzukühlen. Wäre hingegen in dem Strömungsweg 14 auch eine Fettentfernung, beispielsweise in Form eines auf 500 °C beheizten Oxidationskatalysators vorgeschaltet, müsste die Trocknereinheit 4 die Luft von 500 °C zunächst deutlich abkühlen. Der Aufwand wäre erheblich größer.

Der Strömungsweg 12 umfasst hier eine Vorlaufleitung 121, über welche Luft aus dem Garraum 11 in die Reinigungseinheit 2 gesaugt und/oder geblasen werden kann. Der Strömungsweg 12 umfasst zudem eine Rücklaufleitung 122, über welche die gereinigte Luft wieder in den Garraum 11 geblasen und/oder gesaugt werden kann. Die Reinigungseinheit 2 wird hier im Umluftbetrieb eingesetzt.

Zur Reinigung des Wrasens bzw. der Luft aus dem Garraum 11 kann die Reinigungseinheit 2 beispielsweise eine Katalysatoreinrichtung 22 umfassen. Die Katalysatoreinrichtung 22 katalysiert bzw. unterstützt Reaktionen zum Abbau von Fetten und/oder Ölen sowie von geruchsbelästigenden Stoffen im Wrasen.

Die Reinigungseinheit 2 kann zusätzlich oder alternativ auch mit einer Wascheinrichtung 32 ausgestattet sein. Die Wascheinrichtung enthält eine Waschflüssigkeit, durch welche der Wrasen geleitet wird. Die Wascheinrichtung 32 kann den Wrasen auch mit der Waschflüssigkeit besprühen bzw. benebeln. Die Waschflüssigkeit enthält hier ein Reinigungsmittel, beispielsweise mit Emulgatoren und/oder Fettlösern.

Für verbrauchte bzw. verunreinigte Waschflüssigkeit kann die Wascheinrichtung 32 mit einem Sammelbehälter und/oder eine Abführeinrichtung verbunden sein. Die Abführeinrichtung kann beispielsweise an ein Abwassersystem angeschlossen sein. Zudem kann die Wascheinrichtung 32 an einen Vorratsbehälter und/oder an einen Wasseranschluss angebunden sein, um Waschflüssigkeit, Reinigungsmittel bzw. Wasser zu ergänzen.

Die Waschflüssigkeit kann auch kühlbar sein, um eine Temperatur unterhalb der Temperatur der Luft aus dem Garraum zu ermöglichen. Dadurch kann die in dem Wrasen enthaltene Feuchtigkeit beim Durchströmen der Wascheinrichtung 32 wenigstens teilweise kondensieren.

Die Trocknereinheit 4 ist hier über einen eigenen Strömungsweg 14 mit dem Garraum 11 strömungsverbunden. Der Strömungsweg 14 umfasst eine Vorlaufleitung 141, über welche die Luft aus dem Garraum 11 in die Trocknereinheit 4 gesaugt und/oder geblasen werden kann. Zudem umfasst der Strömungsweg 14 eine Rücklaufleitung 142, über welche die getrocknete Luft aus der Trocknereinheit 4 wieder in den Garraum 11 gesaugt und/oder geblasen werden kann.

Zusätzlich oder alternativ zu der Rücklaufleitung 142 kann die Trocknereinheit auch mit einer Auslasseinrichtung 5 ausgestattet sein. Die Auslasseinrichtung 5 ist hier stark schematisiert gestrichelt eingezeichnet. Die Auslasseinrichtung 5 umfasst einen weiteren Strömungsweg 15, über welche die getrocknete Luft aus der Trocknereinheit 4 in die Umgebung des Gargeräts 1 abführbar ist. Auch die Reinigungseinheit 2 kann mit einer Auslasseinrichtung 5 mit einem Strömungsweg 15 in die Umgebung des Gargeräts 1 ausgestattet sein.

Wenn sowohl die Rücklaufleitung 142 als auch der weitere Strömungsweg 15 vorgesehen sind, kann die getrocknete bzw. gereinigte Luft wahlweise entweder in den Garraum 11 zurückgeführt oder aus dem Gargerät 1 ausgeblasen werden. Wenn die getrocknete Luft in die Umgebung des Gargeräts 1 abgeführt wird, ist vorzugsweise eine Trocknung auf Raumluftniveau vorgesehen.

In einer Ausgestaltung kann das Gargerät 1 auch mit einer Auslasseinrichtung 5 ausgestattet sein, welche den Garraum 11 mit der Umgebung des Gargeräts 1 verbindet. Eine solche Auslasseinrichtung 5 ist hier ebenfalls stark schematisiert gestrichelt eingezeichnet. Die Auslasseinrichtung 5 stellt hier einen weiteren Strömungsweg 15 zur Verfügung, über welchen die Luft direkt aus dem Garraum 11 in die Umgebung geblasen und/oder gesaugt werden kann. Eine solche Abfuhr erfolgt bevorzugt erst nach einer ausreichenden Reinigung und Trocknung der Luft.

Die Trocknereinheit 4 umfasst hier einen Wärmetauscher 24 zum Kondensieren der Luftfeuchte. Der Wärmetauscher 24 ist hier als Luft-Luft-Wärmetauscher ausgebildet und wird durch einen Kühlluftstrom gekühlt, welcher hier mittels wenigstens einer Gebläseeinrichtung 8 erzeugt wird. Die Gebläseeinrichtung 8 kann auch an einer anderen als der hier gezeigten Position angeordnet sein. Die Gebläseeinrichtung 8 kann dem Wärmetauscher 24 vorgeschaltet und/oder nachgeschaltet sein.

Die Trocknereinheit 4 kann in einer Ausgestaltung mit einer thermoelektrischen Kühleinrichtung 34 und/oder einer Wärmepumpeneinrichtung 44 ausgestattet sein. Mit der Kühleinrichtung 34 bzw. der Wärmepumpeneinrichtung 44 können die zu trocknende Luft bzw. der Wärmetauscher 24 entsprechend gekühlt werden. Eine solche Kühlung kann alternativ oder ergänzend zu dem Kühlluftstrom vorgesehen sein. Der Wärmetauscher 24 kann auch mit einer Flüssigkeit kühlbar sein.

Der für den Wärmetauscher 24 vorgesehene Kühlluftstrom wird hier auch zur Kühlung einer elektronischen Komponente 102 eingesetzt. Dazu wird die Kühlluft von der Gebläseeinrichtung 8 in das Gargerät 1 eingesaugt und entlang der elektronischen Komponente 102 geblasen, um diese ebenfalls zu kühlen. Beispielsweise ist die elektronische Komponente als eine Elektronikbox ausgebildet, in welcher zum Beispiel eine Steuereinrichtung und/oder eine Leistungselektronik angeordnet sind. Anschließend strömt der Kühlluftstrom entlang des Wärmetauschers 24, um diesen ebenfalls zu kühlen. Der Kühlluftstrom wird dann über eine hier nicht näher dargestellte Öffnung aus dem Gargerät 1 abgeführt.

In einer Ausgestaltung kann die Luft aus dem Garraum 11 mit dem Kühlluftstrom für die elektronische Komponente 102 vermischt werden. Dann ist die Trocknereinheit 4 mit einer Mischeinheit 9 ausgestattet. Der Mischeinheit 9 werden dazu der Kühlluftstrom und die getrocknete und/oder ungetrocknete Luft aus dem Garraum 11 zugeführt. Die Mischluft kann wieder zurück in den Garraum 11 geführt oder über die Auslasseinrichtung 5 abgeführt oder zusätzlich getrocknet werden.

Der Reinigungseinheit 2 und/oder der Trocknereinheit 4 können eine oder mehrere Gebläseeinrichtungen zugeordnet sein, welche hier nicht näher dargestellt sind. Die Gebläseeinrichtungen dienen dann insbesondere zum Fördern der Luft durch die entsprechenden Strömungswege 12, 14, 15.

Auch die Gebläseeinrichtung 8 zur Erzeugung des Kühlluftstroms kann zur Förderung der Luft durch die Strömungswege 12, 14, 15 vorgesehen sein. Das Gargerät 1 umfasst hier ein Umluftgebläse 103 bzw. Heißluftgebläse, welches ebenfalls zur Förderung der Luft durch die Strömungswege 12, 14, 15 eingesetzt werden kann.

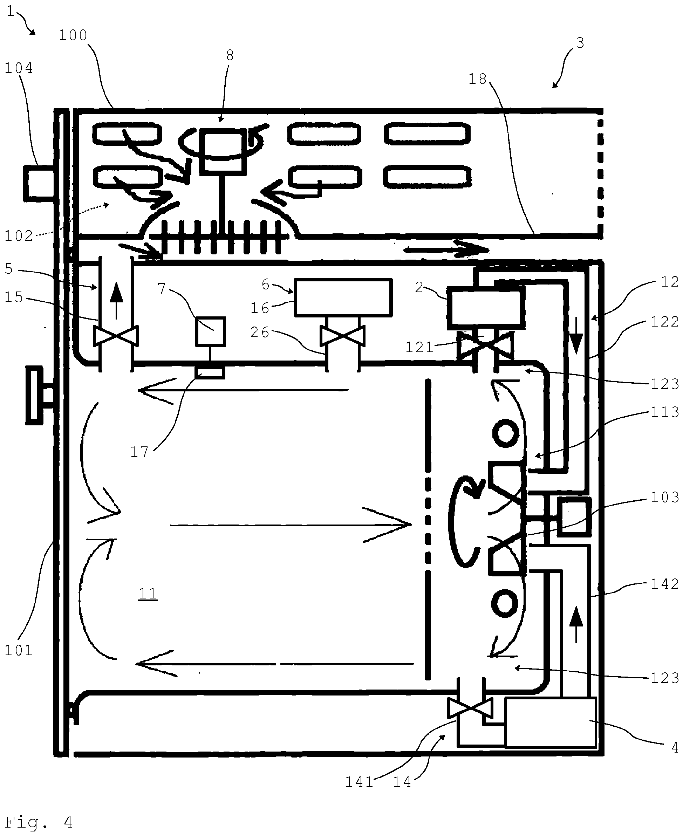

Das Gargerät 1 kann auch mit einer hier nicht näher dargestellten Klimaeinrichtung 6 ausgestattet sein, welche insbesondere mit Bezug zu der Figur 4 näher beschrieben ist.

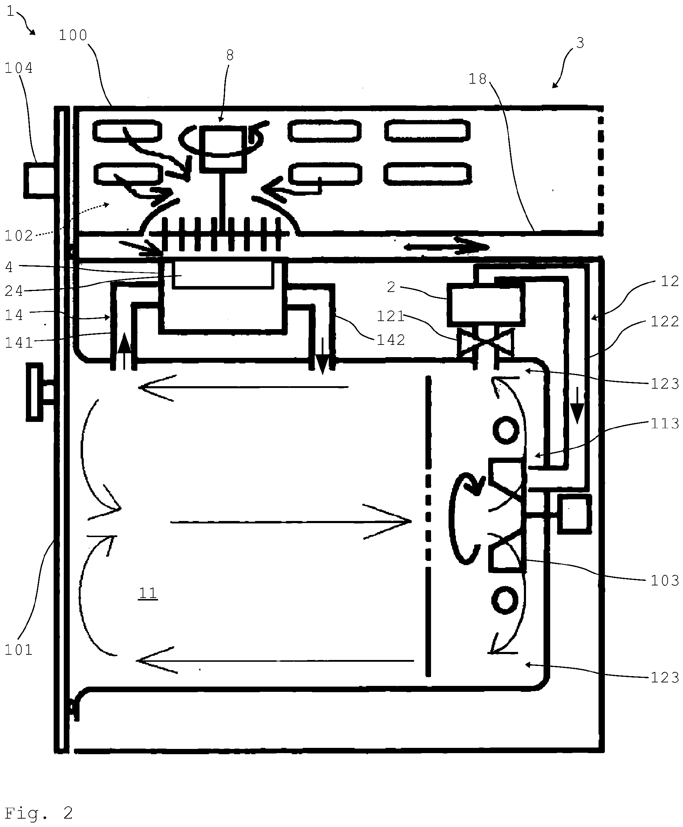

In der Figur 2 ist eine Ausgestaltung des Gargeräts 1 gezeigt, bei dem die Luft aus dem Garraum 11 mittels der Umlufteinrichtung 103 in die Reinigungseinheit 2 gefördert wird. Dazu mündet die Vorlaufleitung 121 in einem Überdruckbereich 123 des Umluftgebläses 103. Die Rücklaufleitung 122 mündet hier in einem Ansaugbereich 113 bzw. Unterdruckbereich des Umluftgebläses 103. Dadurch wird die Luft in die Reinigungseinheit 2 gedrückt und zugleich gesaugt, sodass besonders hohe Volumenströme erreicht werden können. Die durch das Umluftgebläse 103 erzeugten Strömungsbewegungen sind hier durch Pfeile stark schematisch angedeutet. Die Drehrichtung des Umluftgebläses 103 ist hier durch einen Pfeil angedeutet. Die Strömungsrichtungen durch die Reinigungseinheit 2 bzw. die Trocknereinheit 4 sind ebenfalls durch Pfeile angedeutet.

Um die Zufuhr bzw. Abfuhr von Luft aus der Reinigungseinheit 2 zu steuern bzw. zu regeln, ist der Vorlaufleitung 121 hier eine steuerbare Ventileinrichtung zugeordnet. Durch diese kann der Strömungsweg 14 12 automatisiert verschlossen bzw. geöffnet werden. Die Ventileinrichtung ist hier durch zwei gegenüberliegende Pfeilspitzen symbolisiert.

Die Trocknereinheit 4 umfasst hier einen Wärmetauscher 24, welcher an einen Kühlluftkanal 18 angebunden ist. Dabei dient die durch den Kühlluftkanal 18 strömende Kühlluft zur Kühlung des Wärmetauschers 24. Der Kühlluftkanal dient hier zudem zur Abfuhr der Kühlluft, mit welcher die elektronische Komponente 102 gekühlt wird. An den Kühlkanal 18 ist hier eine Gebläseeinrichtung 8 angebunden, welche Luft aus der Umgebung des Gargeräts 1 ansaugt und in den Kühlluftkanal 18 einbläst. Die Strömung der Kühlluft ist hier stark schematisiert durch Pfeile angedeutet. Die Drehbewegung der Gebläseeinrichtung 8 ist durch einen Pfeil angedeutet.

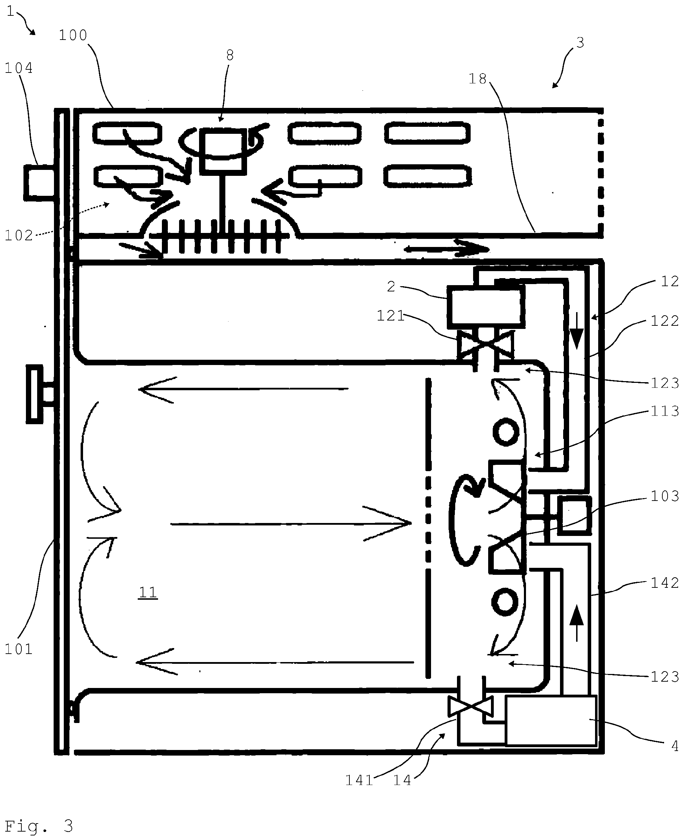

Die Figur 3 zeigt das Gargerät 1 in einer Ausgestaltung, bei der auch die Trocknereinheit 4 von dem Umluftgebläse 103 mit Luft beaufschlagt wird. Diese Ankopplung der Strömungswege 12, 14 an das Umluftgebläse 103 hat den Vorteil, dass die Luftströme beider Zyklen ohne Zusatzpumpe auskommen können.

Die Vorlaufleitung 141 der Trocknereinheit beginnt hier in einem Überdruckbereich 123 des Umluftgebläses 103. Die Rücklaufleitung 142 mündet in einem Ansaugbereich 113 des Umluftgebläses 103. Die Vorlaufleitung 141 ist hier mit einer Ventileinrichtung ausgestattet, durch welche der Strömungsweg 14 je nach Trocknungsbedarf automatisiert geöffnet und verschlossen werden kann. Das Verhältnis von Fettentfernung zu Trocknung bzw. Feuchteentfernung wird dann insbesondere durch die Einstellung der Ventileinrichtungen in den beiden Strömungswegen 12, 14 erreicht.

Der Überdruck, den das Umluftgebläse 103 aufbaut (beispielsweise Drehzahlabhängigkeit), ist ein Beispiel für einen Parameter, über welchen die maximal zu behandelnde Fördermenge in den beiden Strömungswegen 12, 14 einstellbar ist.

In der in der Figur 4 gezeigten Weiterbildung ist das Gargerät 1 mit einer Auslasseinrichtung 5 ausgestattet. Dadurch kann bei Bedarf Luft aus dem Garraum 11 in die Umgebung des Gargeräts 1 abgeführt werden. Die Auslasseinrichtung 5 umfasst hier einen weiteren Strömungsweg 15, welcher an den Kühlluftkanal 18 angebunden ist. Der Strömungsweg 15 ist mit einer vorzugsweise automatisiert schaltbaren Ventileinrichtung ausgestattet. Dadurch kann der Strömungsweg 15 geöffnet bzw. verschlossen werden, je nachdem ob Luft abgeführt oder im Garraum 11 zurückgehalten werden soll. Zeitpunkt, Zeitdauer und Ausmaß des Wrasenauslasses werden insbesondere durch die Ventileinrichtungen bzw. Drosselelemente sowie durch Gebläseeinrichtungen bzw. Lüfter und beispielsweise Lüfterdrehzahlen eingestellt.

Insbesondere wird die Luft nur dann aus dem Garraum 11 abgeführt, wenn sie entsprechend gereinigt und/oder getrocknet wurde. Dazu kann beispielsweise eine Überwachung der Garraumfeuchte mittels einer Sensoreinrichtung 7 vorgesehen sein. Dann gibt die Aufbereitungseinrichtung 3 die Auslasseinrichtung 5 vorzugsweise nur frei, wenn die Garraumfeuchte auf einen geforderten Zielwert reduziert wurde. Beispielsweise ist dazu vorgesehen, dass die Garraumfeuchte nicht wesentlich oberhalb einer Raumluftfeuchte oder sogar unterhalb einer Raumluftfeuchte getrocknet wurde.

Das Gargerät kann in einer Weiterbildung mit einer Klimaeinrichtung 6 zur Anpassung der Garraumfeuchte ausgestattet sein. Die Klimaeinrichtung 6 umfasst hier eine Befeuchtungseinrichtung 16, welche beispielsweise Wasserdampf über einen Strömungsweg 26 in den Garraum 11 einbringen kann. So kann die Feuchte im Garraum 11 gezielt angehoben werden.

Die Klimaeinrichtung 6 ist hier zudem mit einer Sensoreinrichtung 7 wirkverbunden. Die Sensoreirichtung 7 umfasst einen Sensor 17, welcher im Garraum 11 angeordnet ist und zur Erfassung der Garraumfeuchte dient. Die Klimaeinrichtung kann so die Feuchte im Garraum 11 während eines Garvorgangs überwachen und mittels der Befeuchtungseinrichtung 16 auf einen Zielwert einstellen. Der Zielwert ist beispielsweise in einem Garprogramm hinterlegt.

Die Klimaeinrichtung 6 ist hier auch mit der Aufbereitungseinrichtung 3 wirkverbunden. Dadurch kann die Klimaeinrichtung 6 die Trocknereinheit 4 so ansteuern, dass die Garraumfeuchte auf einen Zielwert verringert werden kann. Beispielsweise wird dazu die Leistung der Gebläseeinrichtung 8 für den Kühlluftstrom und/oder die Leistung der thermoelektrischen Kühleinrichtung 34 und/oder der Wärmepumpeneinrichtung 44 eingestellt. Es kann aber auch vorgesehen sein, dass die Trocknereinheit 4 eine voreingestellte Trocknungsleistung erbringt. Dann erfolgt die Einstellung der Garraumfeuchte auf den Zielwert beispielsweise über eine Dauer der Trocknung. Wird die gewünschte Zielfeuchte erreicht, wird die Trocknereinheit 4 deaktiviert und/oder der Strömungsweg 14 verschlossen.

Insbesondere hat das Gargerät 1 eine Sensorik 7 zur Regelung der Funktion der verschiedenen Module 2, 4, 6: zum Beispiel Temperatursensor für Garraumluft und Katalysatorbetriebstemperatur, Feuchtesensor für die Garraumfeuchte oder Feuchte der getrockneten Luft und insbesondere einen Gassensor für brennbare Gase (beispielsweise sogenannte Halbleitergassensoren) zur Überwachung der Katalysatorfunktion. Wenn die Katalysatoreinrichtung 22 optimal arbeitet, verbrennt sie in der Regel alle brennbaren Gase. Im Garraum 11 sollten dann möglichst wenig davon zu finden sein.

Bei der hier vorgestellten getrennten bzw. parallelen Schaltung des Reinigungszyklus und des Trocknungszyklus können besonders unaufwendig unterschiedliche Volumenströme aus dem Garraum 11 eingestellt werden. Zudem gibt es wesentlich mehr unaufwendig umsetzbare Möglichkeiten, das gewünschte Verhältnis von Fettentfernung und Trocknung frei zu wählen. Zudem sind die Volumenströme und der Grad der Entfeuchtung (beispielsweise Trocknertemperatur) bzw. das Ausmaß der Fettentfernung (beispielsweise Katalysatortemperatur) im Wesentlichen frei konfigurierbar.

### Bezugszeichenliste

- 1: Gargerät
- 2: Reinigungseinheit
- 3: Aufbereitungseinrichtung
- 4: Trocknereinheit
- 5: Auslasseinrichtung
- 6: Klimaeinrichtung
- 7: Sensoreinrichtung
- 8: Gebläseeinrichtung
- 9: Mischeinheit
- 11: Garraum
- 12: Strömungsweg
- 14: Strömungsweg
- 15: Strömungsweg
- 16: Befeuchtungseinrichtung
- 17: Sensor
- 18: Kühlluftkanal
- 22: Katalysatoreinrichtung
- 24: Wärmetauscher
- 26: Strömungsweg
- 32: Wascheinrichtung
- 34: Kühleinrichtung
- 44: Wärmepumpeneinrichtung
- 100: Backofen
- 101: Tür
- 102: Komponente
- 103: Umluftgebläse
- 104: Bedieneinrichtung
- 113: Ansaugbereich
- 121: Vorlaufleitung
- 122: Rücklaufleitung
- 123: Überdruckbereich
- 141: Vorlaufleitung
- 142: Rücklaufleitung

## Patentansprüche

1. Gargerät (1) mit wenigstens einem beheizbaren und durch wenigstens eine Garraumtür (101) verschließbaren Garraum (11) und mit wenigstens einer mit dem Garraum (11) strömungsverbundenen Aufbereitungseinrichtung (3), welche wenigstens eine Reinigungseinheit (2) zum Reinigen und wenigstens eine Trocknereinheit (4) zum Trocknen von Luft aus dem Garraum (11) umfasst,
**dadurch gekennzeichnet,**
**dass** die Reinigungseinheit (2) und die Trocknereinheit (4) unabhängig voneinander betreibbar sind und über unabhängig voneinander betreibbare Strömungswege (12, 14) mit dem Garraum (11) verbunden sind.

2. Gargerät (1) nach dem vorhergehenden Anspruch, **dadurch gekennzeichnet, dass** die Reinigungseinheit (2) dazu geeignet und ausgebildet ist, die Luft aus dem Garraum (11) über wenigstens eine Vorlaufleitung (121) zu entnehmen und die gereinigte Luft über wenigstens eine Rücklaufleitung (122) wieder in den Garraum (11) zu führen.

3. Gargerät (1) nach einem der vorhergehenden Ansprüche, **dadurch gekennzeichnet, dass** die Trocknereinheit (4) dazu geeignet und ausgebildet ist, die Luft aus dem Garraum (11) über wenigstens eine Vorlaufleitung (141) zu entnehmen und die getrocknete Luft über wenigstens eine Rücklaufleitung (142) wieder in den Garraum (11) zu führen und/oder die getrocknete Luft über wenigstens eine Auslasseinrichtung (5) teilweise aus dem Gargerät (1) abzuführen.

4. Gargerät (1) nach einem der vorhergehenden Ansprüche, **dadurch gekennzeichnet, dass** die Trocknereinheit (4) dazu geeignet und ausgebildet ist, die Luft aus dem Garraum (11) mit wenigstens einem Kühlluftstrom für wenigstens eine elektronische Komponente (102) des Gargeräts (1) zu mischen.

5. Gargerät (1) nach einem der vorhergehenden Ansprüche, **dadurch gekennzeichnet, dass** die Trocknereinheit (4) dazu geeignet und ausgebildet ist, die Luft aus dem Garraum (11) mittels wenigstens eines Wärmetauschers (24) zu trocknen.

6. Gargerät (1) nach einem der vorhergehenden Ansprüche, **dadurch gekennzeichnet, dass** der Reinigungseinheit (2) und/oder der Trocknereinheit (4) die Luft aus dem Garraum (11) mittels wenigstens eines Umluftgebläses (103) für einen Umluftgarbetrieb wenigstens teilweise zuführbar ist.

7. Gargerät (1) nach einem der vorhergehenden Ansprüche, **dadurch gekennzeichnet, dass** die Reinigungseinheit (2) dazu geeignet und ausgebildet ist, die gereinigte Luft in einen Ansaugbereich (113) eines Umluftgebläses (103) für einen Umluftgarbetrieb zurückzuführen und/oder dass die Trocknereinheit (4) dazu geeignet und ausgebildet ist, die getrocknete Luft in einen Ansaugbereich (113) eines Umluftgebläses (103) für einen Umluftgarbetrieb zurückzuführen.

8. Gargerät (1) nach einem der vorhergehenden Ansprüche, umfassend wenigstens einen weiteren Strömungsweg (15) zum Abführen von Luft aus dem Garraum (11) in die Umgebung des Gargeräts (1).

9. Gargerät (1) nach einem der vorhergehenden Ansprüche, **dadurch gekennzeichnet, dass** die Reinigungseinheit (2) wenigstens eine Katalysatoreinrichtung (22) umfasst und/oder dass die Reinigungseinheit (2) dazu geeignet und ausgebildet ist, hydrophobe Bestandteile der Luft aus dem Garraum (11) mittels wenigstens einer Wascheinrichtung (32) in wenigstens einer Waschflüssigkeit zu kondensieren.

10. Gargerät (1) nach dem vorhergehenden Anspruch, **dadurch gekennzeichnet, dass** die Wascheinrichtung (32) dazu geeignet und ausgebildet ist, die Luft aus dem Garraum (11) durch die Waschflüssigkeit zu leiten und/oder mit der Waschflüssigkeit zu besprühen.

11. Gargerät (1) nach einem der beiden vorhergehenden Ansprüche, **dadurch gekennzeichnet, dass** die Waschflüssigkeit wenigstens einen Emulgator und/oder wenigstens einen Fettlöser enthält.

12. Gargerät (1) nach einem der drei vorhergehenden Ansprüche, **dadurch gekennzeichnet, dass** die Wascheinrichtung (32) dazu geeignet und ausgebildet ist, Feuchtigkeit in der Luft aus dem Garraum (11) wenigstens teilweise durch die Waschflüssigkeit zu kondensieren.

13. Gargerät (1) nach einem der vorhergehenden Ansprüche, **dadurch gekennzeichnet, dass** die Aufbereitungseinrichtung (3) dazu geeignet und ausgebildet ist, eine Luftfördermenge zu der Trocknereinheit (4) und/oder zu der Reinigungseinheit (2) zu steuern.

14. Gargerät (1) nach einem der vorhergehenden Ansprüche, umfassend wenigstens eine Klimaeinrichtung (6) zur Anpassung der Garraumfeuchte während eines Garvorgangs auf wenigstens einen Zielwert.

15. Verfahren zum Betreiben eines Gargeräts (1) mit wenigstens einem beheizbaren und durch wenigstens eine Garraumtür (101) verschließbaren Garraum (11) und mit wenigstens einer mit dem Garraum (11) strömungsverbundenen Aufbereitungseinrichtung (3), welche wenigstens eine Reinigungseinheit (2) zum Reinigen und wenigstens eine Trocknereinheit (4) zum Trocknen von Luft aus dem Garraum (11) umfasst,
**dadurch gekennzeichnet,**
**dass** die Reinigungseinheit (2) und die Trocknereinheit (4) unabhängig voneinander betrieben werden und über unabhängig voneinander betreibbare Strömungswege (12, 14) mit dem Garraum (11) verbunden sind.

## Claims

1. Cooking appliance (1) comprising at least one heatable cooking chamber (11) which can be closed by means of at least one cooking chamber door (101) and comprising at least one processing device (3) which is fluidically connected to the cooking chamber (11) and includes at least one purification unit (2) for purifying air and at least one drying unit (4) for drying air from the cooking chamber (11), **characterised in that** the purification unit (2) and the drying unit (4) are independently operable and are connected to the cooking chamber (11) via independently operable flow paths (12, 14).

2. Cooking appliance (1) according to the preceding claim, **characterised in that** the purification unit (2) is suitable and designed for extracting the air from the cooking chamber (11) via at least one feed pipe (121) and for guiding the purified air back into the cooking chamber (11) via at least one return pipe (122).

3. Cooking appliance (1) according to either of the preceding claims, **characterised in that** the drying unit (4) is suitable and designed for extracting the air from the cooking chamber (11) via at least one feed pipe (141) and for guiding the dried air back into the cooking chamber (11) via at least one return pipe (142) and/or for partially removing the dried air from the cooking appliance (1) via at least one outlet device (5).

4. Cooking appliance (1) according to any of the preceding claims, **characterised in that** the drying unit (4) is suitable and designed for mixing the air from the cooking chamber (11) with at least one cooling airflow for at least one electronic component (102) of the cooking appliance (1).

5. Cooking appliance (1) according to any of the preceding claims, **characterised in that** the drying unit (4) is suitable and designed for drying the air from the cooking chamber (11) by means of at least one heat exchanger (24).

6. Cooking appliance (1) according to any of the preceding claims, **characterised in that** the air from the cooking chamber (11) can at least partially be fed into the purification unit (2) and/or the drying unit (4) by means of at least one circulating fan (103) for a convection cooking operation.

7. Cooking appliance (1) according to any of the preceding claims, **characterised in that** the purification unit (2) is suitable and designed for recirculating the purified air into a suction region (113) of a circulating fan (103) for a convection cooking operation and/or **in that** the drying unit (4) is suitable and designed for recirculating the dried air into a suction region (113) of a circulating fan (103) for a convection cooking operation.

8. Cooking appliance (1) according to any of the preceding claims, comprising at least one further flow path (15) for removing air from the cooking chamber (11) into the surroundings of the cooking appliance (1).

9. Cooking appliance (1) according to any of the preceding claims, **characterised in that** the purification unit (2) comprises at least one catalyst device (22) and/or **in that** the purification unit (2) is suitable and designed for condensing hydrophobic components of the air from the cooking chamber (11) in at least one washing liquid by means of at least one washing device (32).

10. Cooking appliance (1) according to the preceding claim, **characterised in that** the washing device (32) is suitable and designed for conducting the air from the cooking chamber (11) through the washing liquid and/or spraying the air with the washing liquid.

11. Cooking appliance (1) according to either of the two preceding claims, **characterised in that** the washing liquid contains at least one emulsifier and/or at least one fat solvent.

12. Cooking appliance (1) according to any of the three preceding claims, **characterised in that** the washing device (32) is suitable and designed for condensing moisture in the air from the cooking chamber (11) at least in part by means of the washing liquid.

13. Cooking appliance (1) according to any of the preceding claims, **characterised in that** the processing device (3) is suitable and designed for controlling an air flow rate to the drying unit (4) and/or to the purification unit (2).

14. Cooking appliance (1) according to any of the preceding claims, comprising at least one air conditioning device (6) for adjusting the cooking chamber moisture to at least one target value during a cooking process.

15. Method for operating a cooking appliance (1) comprising at least one heatable cooking chamber (11) which can be closed by means of at least one cooking chamber door (101) and comprising at least one processing device (3) which is fluidically connected to the cooking chamber (11) and includes at least one purification unit (2) for purifying air and at least one drying unit (4) for drying air from the cooking chamber (11), **characterised in that** the purification unit (2) and the drying unit (4) are operated independently of one another and are connected to the cooking chamber (11) via independently operable flow paths (12, 14).

## Revendications

1. Appareil de cuisson (1) comportant au moins un espace de cuisson (11) pouvant être chauffé et fermé par au moins une porte d'espace de cuisson (101), et au moins un dispositif de préparation (3) relié en écoulement avec l'espace de cuisson (11), lequel dispositif comprend au moins une unité de nettoyage (2) pour le nettoyage et au moins une unité de séchage (4) pour le séchage de l'air provenant de l'espace de cuisson (11), **caractérisé en ce que** l'unité de nettoyage (2) et l'unité de séchage (4) peuvent fonctionnées indépendamment l'une de l'autre et sont reliées à l'espace de cuisson (11) par des trajets d'écoulement (12, 14) pouvant fonctionner indépendamment l'un de l'autre.

2. Appareil de cuisson (1) selon la revendication précédente, **caractérisé en ce que** l'unité de nettoyage (2) est adaptée et conçue pour extraire l'air de l'espace de cuisson (11) par au moins une conduite d'aller (121) et rediriger l'air épuré dans l'espace de cuisson (11) par au moins une conduite de retour (122).

3. Appareil de cuisson (1) selon l'une des revendications précédentes, **caractérisé en ce que** l'unité de séchage (4) est adaptée et conçue pour extraire l'air de l'espace de cuisson (11) par au moins une conduite d'aller (141) et rediriger l'air séché dans l'espace de cuisson (11) par au moins une conduite de retour (142) et/ou évacuer partiellement l'air séché de l'appareil de cuisson (1) par au moins un moyen d'évacuation (5).

4. Appareil de cuisson (1) selon l'une des revendications précédentes, **caractérisé en ce que** l'unité de séchage (4) est adaptée et conçue pour mélanger l'air provenant de l'espace de cuisson (11) avec au moins un flux d'air de refroidissement pour au moins un composant électronique (102) de l'appareil de cuisson (1).

5. Appareil de cuisson (1) selon l'une des revendications précédentes, **caractérisé en ce que** l'unité de séchage (4) est adaptée et conçue pour sécher l'air provenant de l'espace de cuisson (11) au moyen d'au moins un échangeur de chaleur (24).

6. Appareil de cuisson (1) selon l'une des revendications précédentes, **caractérisé en ce que** l'air provenant de l'espace de cuisson (11) peut être acheminé au moins partiellement vers l'unité de nettoyage (2) et/ou l'unité de séchage (4) au moyen d'au moins une soufflante de circulation d'air (103) pour une opération de cuisson par circulation d'air.

7. Appareil de cuisson (1) selon l'une des revendications précédentes, **caractérisé en ce que** l'unité de nettoyage (2) est adaptée et conçue pour renvoyer l'air épuré dans une zone d'aspiration (113) d'une soufflante de circulation d'air (103) pour une opération de cuisson par circulation d'air et/ou l'unité de séchage (4) est adaptée et conçue pour renvoyer l'air séché dans une zone d'aspiration (113) d'une soufflante de circulation d'air (103) pour une opération de cuisson par circulation d'air.

8. Appareil de cuisson (1) selon l'une des revendications précédentes, comprenant au moins un autre trajet d'écoulement (15) pour l'évacuation de l'air provenant de l'espace de cuisson (11) dans l'environnement de l'appareil de cuisson (1).

9. Appareil de cuisson (1) selon l'une des revendications précédentes, **caractérisé en ce que** l'unité de nettoyage (2) comprend au moins un dispositif de catalyseur (22) et/ou **en ce que** l'unité de nettoyage (2) est adaptée et conçue pour condenser les composants hydrophobes de l'air provenant de l'espace de cuisson (11) au moyen d'au moins un dispositif de lavage (32) dans au moins un liquide de lavage.

10. Appareil de cuisson (1) selon la revendication précédente, **caractérisé en ce que** le dispositif de lavage (32) est adapté et conçu pour diriger l'air provenant de l'espace de cuisson (11) à travers le liquide de lavage et/ou pour le pulvériser avec le liquide de lavage.

11. Appareil de cuisson (1) selon l'une des deux revendications précédentes, **caractérisé en ce que** le liquide de lavage contient au moins un émulsifiant et/ou au moins un solvant de graisse.

12. Appareil de cuisson (1) selon l'une des trois revendications précédentes, **caractérisé en ce que** le dispositif de lavage (32) est adapté et conçu pour condenser, au moins partiellement dans le liquide de lavage, l'humidité de l'air provenant de l'espace de cuisson (11).

13. Appareil de cuisson (1) selon l'une des revendications précédentes, **caractérisé en ce que** le dispositif de préparation (3) est adapté et conçu pour commander un débit de refoulement d'air vers l'unité de séchage (4) et/ou vers l'unité de nettoyage (2).

14. Appareil de cuisson (1) selon l'une des revendications précédentes, comprenant au moins un dispositif de climatisation (6) permettant de régler l'humidité de l'espace de cuisson pendant un processus de cuisson sur au moins une valeur cible.

15. Procédé de fonctionnement d'un appareil de cuisson (1) comportant au moins un espace de cuisson (11) pouvant être chauffé et fermé par au moins une porte d'espace de cuisson (101), et au moins un dispositif de préparation (3) relié en écoulement avec l'espace de cuisson (11), lequel dispositif comprend au moins une unité de nettoyage (2) pour le nettoyage et au moins une unité de séchage (4) pour le séchage de l'air provenant de l'espace de cuisson (11), **caractérisé en ce que** l'unité de nettoyage (2) et l'unité de séchage (4) fonctionnent indépendamment l'une de l'autre et sont reliées à l'espace de cuisson (11) par des trajets d'écoulement (12, 14) pouvant fonctionner indépendamment l'un de l'autre.
